# EUROPEAN PATENT APPLICATION

(11) **EP 3 839 102 A1**
(43) Date of publication of application: **23.06.2021**
(21) Application number: 20020624.1
(22) Date of filing: 16.12.2020
(51) Int. Cl.: C25B 9/65, C25B 15/02, C25B 1/04, H02J 3/01, H02J 3/18

(54) **COMBINATION OF POWER ELECTRONICS SYSTEMS REGULATED IN TERMS OF HARMONIC FILTERING AND/OR REACTIVE POWER COMPENSATION SUPPLYING A CONTROLLED UNIT FOR PRODUCING HYDROGEN AND OXYGEN BY ELECTROLYSIS OF WATER**

(30) Priority: 19.12.2019 FR 1914954
(71) Applicant: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventor: Brochard, Antoine, 92150 Suresnes (FR)
(74) Representative: Stang, Stefan

(57) **Abstract**

The invention relates to an electrical installation comprising at least one harmonic polluter and/or a consumer consuming a large amount of reactive energy, to which is added at least one active harmonic filter at a suitable voltage level and configured so as to compensate the unwanted current distortion and/or allow compensation of reactive energy absorbed from the network. Using a 3rd regulation loop, the voltage and the capacitance of the DC bus of the harmonic filter is adapted in order to allow the connection of a set of electrolysis cells on its DC bus, thus harnessing the available load rate of the filter or filters on the basis of the operating points and of the variable absorption spectrum of the polluter, the configurations of the upstream network, the ageing coefficients and the normative dimensioning margins by producing hydrogen by electrolysis of water.

## Description

### Field of the invention

The present invention relates to industrial electrical installations. More particularly, the invention relates to the combination of power electronics and electrolysis of water allowing harmonic filtering and/or reactive power compensation for an electrical installation, generated by one or more adjacent harmonic polluters.

### Prior art

The development of electricity networks and energy management are subject to major changes, in particular in order to reduce the carbon footprint of human activities. Electricity networks are deployed on a large scale and are strongly interconnected on the scale of regions, countries or continents, and are all links between various industries that are increasingly incorporating the management of their consumption profile into their design and their operations.

Due to the increase in the non-controllable proportion of renewable energy sources in these networks, the ability to regulate consumed active power is increasingly being integrated into the design and management of high-energy industrial processes in order to offer an additional degree of regulation for the network manager. Active power corresponds to the portion of the power for which the voltage and the current are in phase, while reactive power corresponds to a current that is phase-offset with respect to the voltage, thereby limiting use thereof. Reactive power compensation consists in limiting the phase offset between voltage and current, in order to increase the amount of active power and decrease the amount of reactive power.

Whether a public electricity network or private island installations, these systems use a sinusoidal three-phase alternating (AC) voltage whose technical features, efficiency, quality, dynamics and reliability are standardized in order to meet the constraints of connected electrical consumers, regardless of their nature.

In particular, network managers are required to maintain the quality of the voltage wave shared on the network, governed in particular by the IEC 61000-2-2, 61000-2-4, 61000-3-6 or IEE-519 standards. The sinusoidal voltage distortion is then defined as "harmonic pollution", and the voltage differences between phases are defined by an "imbalance". The amplitudes of these distortions are normatively limited in order to ensure the correct operation of any connected load.

Moreover, network managers, in order to optimize electricity transport and distribution infrastructures, set limits on reactive power consumption. Reactive power is generated through a phase offset between voltage and current, itself created by the inductive elements in the network. The limit on reactive power consumption is reflected in particular by the definition of a minimum power factor at the point of connection. This limit on the power factor makes it possible in particular to optimize the transmission and transformation equipment in the network and bolsters the stability of the generators.

An electrical load is said to be non-linear or a harmonic polluter when its impedance varies as a function of the voltage applied thereto. Thus, when subjected to a sinusoidal voltage source, the current absorbed by a load said to be non-linear is not sinusoidal. These harmonic polluters are generally linked to the use of power electronics in the driving of variable-speed motors (traction motors, industrial motors) or DC current rectifiers used in chlor-alkali production, aluminium foundries or when using an electric-arc or induction furnace, in metallurgy or even in electricity generators, in particular solar or wind farms.

These non-linear electrical loads have the drawback of absorbing or supplying a non-sinusoidal current, said to be polluted with "current harmonics" which, depending on the power ratios between the polluting load and the network impedance, may generate a distortion of the network voltage and thus disrupt the entire electrical distribution system and the other loads that are connected thereto. These voltage and current distortions in particular cause additional heating in transmission lines and transformer stations, pulsed mechanical torques on electric motors, phase imbalances, zero-sequence currents, unwanted tripping of protection mechanisms and possible potentially destructive resonance with capacitive elements. From the point of view of the network, reference is then made to a polluter receiver, or harmonic polluter, and the level of pollution accepted on the network is generally greatly limited by the manager according to the short-circuit power, that is to say the dynamic power capacity of the network at the point of connection under consideration.

The dimensioning of private industrial networks using high-power harmonic polluters has a tendency to separate and group together the polluters on a network dimensioned so as to accept a high current distortion, and interconnect them to other linear loads and to the public network at a point of connection called PCC (*Point of Common Coupling)* where the short-circuit power is as high as possible, thus attenuating the influence of the pollution on its surroundings. Moreover, on these network portions affected by strong harmonic pollution, particular attention is paid to the harmonic impedance of the network, the possibility of resonance of certain capacitive equipment, which may amplify the voltage distortion (capacitors, cables, etc.), as well as to the possible exchanges of harmonic or inter-harmonic current between the various interconnected power electronics devices.

It is possible to eliminate unwanted harmonics by introducing, on the network, one or more harmonic filters connected in parallel or in series with the polluters. Seen from the upstream network, the harmonic impedances of the polluter and of the filter are then made linear, the filter "absorbing" and/or "supplying" the unwanted harmonic currents in phase opposition from the adjacent polluter, and thus cancelling out their effect.

The combinations of inductors and capacitors on passive filters are tuned for one or more frequencies, and are generally combined with one another in order to compensate a spectrum from 3 to 50 times the frequency of the network depending on the harmonic spectrum that is created. These filters are said to be passive, as opposed to what are called "active" power electronics devices consisting of thyristors or transistors with a higher switching frequency, allowing dynamic regulation of the waveform of the current absorbed by the device on each of its phases. By regulating the measurement of harmonic currents or voltage, an active filter is regulated on each of its phases in order to import and export, to the network, the harmonic current consumed by the adjacent polluter dynamically cancelling out the non-linear load. Active power filters (APF) thus allow very precise cancellation of unwanted frequencies, and also offer greater flexibility in terms of adjusting the filtering in terms of frequency range and capacity. They are thus able, within the limits of the regulation dynamics, to adapt to variable harmonic spectra as a function of various load rates of the installation, the configurations of the upstream network and possible transient amplifications.

Active power filters may be based on various types of component, depending in particular on the voltage on the network and the powers that are used. Active power filters are for example, for low-voltage (<1 kV) and medium-voltage (≤15 kV) filters, formed of high-frequency switching systems (IGBTs, MOSFETs, etc.) charging a capacitive DC bus. At a higher voltage (>15 kV) and for higher powers, static compensators (STACOM) are based on thyristor switching and offer control of harmonic currents on a more limited spectrum and amplitude. Switching systems using developments on IGBT and IGCT transistors allow medium-voltage high-frequency switching systems (3-6 kV for the most part, and up to 10 kV in some cases).

In addition to compensating harmonic currents, these same devices combined with capacitors on the DC bus make it possible to control the absorption of currents at the frequency of the network, and are thus able to act as reactive power compensation devices of the installation and imbalance stabilizers. The combination of these three types of regulation adds up within the limit of the current capacities and the switching frequency of the switches that are used. If and when needed, these power filters and reactive power compensators may be combined in order simultaneously to eliminate unwanted harmonics, to stabilize imbalances and to compensate the reactive power created by industrial installations, thus making it possible to satisfy the normative constraints of connections to public electricity networks.

Existing devices therefore allow effective processing of harmonic filtering and reactive power regulation for industrial installations such as a water electrolyser, a chlor-alkali production unit, an aluminium foundry, an electric-arc or induction furnace, driving of variable-speed motors or solar or wind farms, which are all examples of "harmonic polluters" and reactive power consumers.

The filtering and compensation requirements are dependent on multiple dimensioning factors, considering the extreme cases of operation both from the point of view of the polluter (performance randoms, load peaks, ageing, exceptional operations) and of the network (degraded configurations, variable short-circuit power levels, load factor, variable or changing harmonic impedance). They are thus, most of the time, operated at a low load rate and at the nominal point only for exceptional operating cases. In addition to these dimensioning parameters, there are also dimensioning margins that are sometimes added to the network features, the performance of the polluters and/or the performance of the filters further degrading the load rate of this equipment, or even, in the case of passive filters, overdimensioning that penalizes reactive power compensation or may limit the operating range of the installation.

This observation therefore makes it possible to explore, in the present invention, an optimization vector that simultaneously allows harmonic filtering, and/or reactive power compensation, and/or voltage stabilization and finally dynamic control of active power consumption, while at the same time optimizing the load factor of this active harmonic filtering equipment by producing hydrogen by electrolysis.

### Summary of the invention

To this end, the present invention proposes to add, to these active filtering systems, an additional regulation mode by combining them with a controlled system for producing hydrogen and oxygen by electrolysis of water, whose DC current load profile and operating flexibility comply with the features of the DC buses of the active filters.

In one set of embodiments, the invention also allows current adaptation on the basis of the first two regulation modes, allowing filtering and reactive power compensation.

To this end, one subject of the invention is an electrical installation comprising:
- at least one harmonic polluter;
- at least one active harmonic filter connected to the at least one harmonic polluter at at least one point of common coupling PCC, the active harmonic filter having at least one DC electric bus equipped with at least one capacitor;
- at least one electrolyser connected to the DC electric bus of the active harmonic filter, and configured so as to produce hydrogen from power transmitted in the form of DC electric current.
- at least one active harmonic filter being configured so as to absorb power available on the installation and to transmit all or some of its nominal power to the electrolyser in the form of DC current.

As the case may be, the invention may comprise one or more of the following features:
- the at least one harmonic polluter is at least one unit for producing hydrogen by electrolysis of water, and the at least one electrolyser is dimensioned so as to ensure an average hydrogen production of less than 50%, and preferably between 10% and 25%, of the sum of the average hydrogen production of the at least one electrolyser and of the at least one unit for producing hydrogen by electrolysis of water.
- the at least one harmonic polluter comprises at least one device chosen from a group comprising a chlor-alkali electrolysis unit, an aluminium foundry, an electric-arc furnace, a traction network, a variable-speed motor, a solar farm and a wind farm.
- the electrolyser connected to the DC bus is a proton exchange membrane (PEM) cell.
- the installation comprises a set of active harmonic filters allocated to a harmonic range, to a reactive power compensation capacity and to a hydrogen and oxygen production capacity and comprises, for each of the active harmonic filters, a DC bus connecting it to at least one electrolyser dimensioned on the basis of the power available on the DC bus at the output of said active harmonic filter.
- the at least one electrolyser connected to an active harmonic filter is able to be connected and disconnected to and from at least one additional electrical capacitor via a switch or a transistor on the DC bus.
- the at least one harmonic polluter is associated with a process using hydrogen produced by the at least one electrolyser as input.
- the electrolyser is additionally configured so as to produce oxygen, and the at least one harmonic polluter is associated with a process using the oxygen produced by the at least one electrolyser as input.
- the point of common coupling is connected to a high-voltage network, and the at least one active harmonic filter is associated with at least one static compensator by way of at least one DC/DC converter or chopper supplying the at least one electrolyser.
- the installation comprises at least one second DC bus, to which the at least one electrolyser is connected, and at least one multi-stage DC/DC or AC/DC converter configured so as to reduce the voltage of the at least one DC bus to at least one second DC bus, so that the voltage on the at least one second DC bus complies with the voltage accepted at input by the at least one electrolyser.
- the installation comprises a controller configured so as to control the operations of the at least one active harmonic filter and of the at least one electrolyser on the basis of at least one element chosen from among a current measurement on the installation, a voltage measurement on the installation, instructions from a manager of a network to which the PCC is coupled.
- the controller is configured so as to execute a first regulator configured so as to perform harmonic filtering, a second regulator configured so as to perform reactive power compensation, a third regulator configured so as to control the electrolysis on the basis of an active power available on the installation.
- the controller is additionally configured so as to execute dynamic stabilization of the voltage at the PCC, through load absorption on said capacitor.

According to another aspect, the invention relates to a method comprising:
- calculating at least one harmonic filtering operation, or reactive power compensation operation, on an electrical installation comprising:
   ∘ at least one harmonic polluter;
   ∘ at least one active harmonic filter connected to the at least one harmonic polluter at at least one point of common coupling PCC, the active harmonic filter having at least one DC electric bus equipped with a capacitor;
   ∘ at least one electrolyser connected to the DC bus of the active filter, and configured so as to produce hydrogen from power transmitted in the form of DC electric current;
- calculating a power available on the installation;
- controlling the at least one active harmonic filter in order to:
   ∘ perform at least the harmonic filtering or the reactive power compensation;
   ∘ absorb power available on the installation and transmit all or some of its nominal power to the electrolyser in the form of DC current;
- controlling the at least one electrolyser to produce hydrogen from the power transmitted on the DC bus.

Another subject of the invention is a computer program product comprising program code instructions recorded on a computer-readable medium and configured, when the computer program product is executed by a processor, so as to control equipment of an electrical installation in order to perform the method according to the invention.

Other features, details and advantages of the invention will emerge on reading the description, given with reference to the appended drawings, which are given by way of example and in which, respectively:
Fig.1a shows one example of electric voltage and current in a network affected by a harmonic polluter, without an active harmonic filter;
Fig.1b shows one example of electric voltage and current in a network affected by a harmonic polluter, with an active harmonic filter;
Fig.2 shows a first example of an electrical installation according to one set of embodiments of the invention;
Fig.3 shows a second example of an electrical installation according to one set of embodiments of the invention;
Fig.4 shows one example of nested regulation loops in one set of embodiments of the invention;
Fig.5 shows one example of a method according to one set of embodiments of the invention.
Fig.6 shows a third example of an electrical installation according to one set of embodiments of the invention;

Some acronyms commonly used in the technical field of the present application may be used during the description. These acronyms are listed in the table below, in particular with their expression and their meaning.

**Table 1**

| Acronym | Expression | Meaning |
|---|---|---|
| AC | Alternating Current | Alternating current |
| APF | Active Power Filter | Active harmonic filter |
| DC | Direct Current | Direct Current |
| HVDC | High Voltage Direct Current | High Voltage Direct Current (HVDC). Technology for transporting DC current at high voltage, allowing current to be transported at high voltage over long distances. |
| IGBT | Insulated Gate Bipolar Transistor | Insulated gate bipolar transistor. Semiconductor device used as an electronic switch. |
| GTO | Gate Turn-Off thyristor | Gate turn-off thyristor |
| IGCT | Integrated Gate-Commutated Thyristors | Integrated Gate-Commutated Thyristor |
| PCC | Point of Common Coupling | Point of Common Coupling - point of interconnection between a private electricity network and a public electricity network or another private network. |
| PEM | Proton Exchange Membrane | Static synchronous compensator: device for regulating an AC network, making it possible to improve the power factor and reduce voltage fluctuations. Proton Exchange Membrane. Type of electrolysis cell, and fuel cell. |
| STATCOM | STATic synchronous COMpensator | Static synchronous compensator: device for regulating an AC network, making it possible to improve the power factor, reduce voltage fluctuations and perform harmonic filtering on a defined frequency spectrum. |

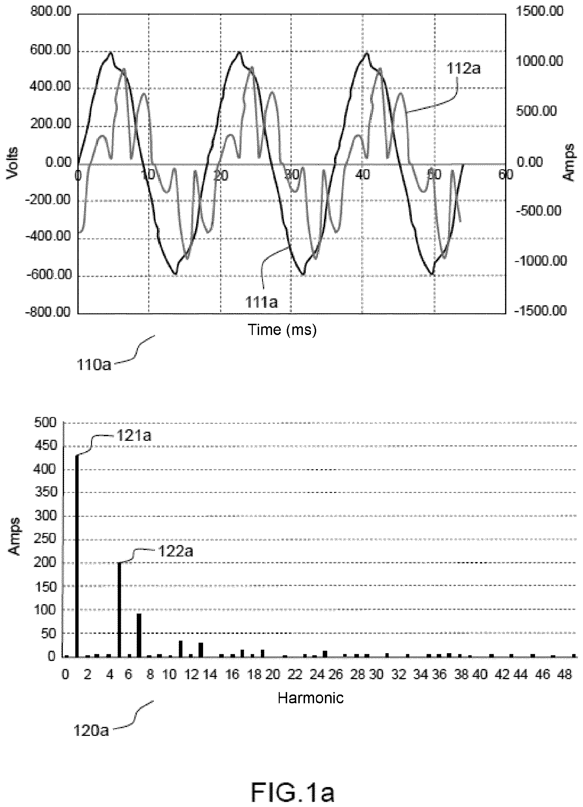

Figure 1a shows one example of electric voltage and current measurements in a network affected by a harmonic polluter, without an active harmonic filter.

The graph 110a shows the evolution of the voltage and the electric current on this network, for two cycles of 20 ms (network with a frequency of 50 Hz). The horizontal axis represents time, in milliseconds, the left-hand vertical axis represents voltage, in volts, and the right-hand vertical axis represents current, in amperes. The curves 111a and 112a respectively show the evolution of the voltage and of the current as a function of time.

The graph 120a shows, on this same circuit, the harmonics of the electric current as obtained through a Fourier transform. The horizontal axis represents the harmonic order with respect to the fundamental (50 or 60 Hz), and the vertical axis represents the current thereof, in amperes. The height for each harmonic order represents the current of each harmonic. For example, the bar 121a shows that the fundamental frequency (or 1st order harmonic) has a current of just under 450 amperes, while the bar 122a shows that the 5th harmonic has a current of around 200 amperes.

The curves 111a and 112a show that the voltage and current on this network are subject to interference, and do not form sinusoids. In addition, the graph 120a shows that some harmonics have a very high current. For example, the bar 122a shows that the current of the 5th harmonic is very high.

Depending on the manager's criteria and the features of the network, a waveform and a current harmonic distortion rate as shown in Figure 1a may be problematic for a PCC connecting this installation to a low-power public network.

Regardless of their amplitude, the harmonic frequencies also have a variable impact on the networks according to their impedance and any resonances that prohibit any harmonic excitation. The harmonics may thus be filtered over a defined frequency spectrum, for example between one and fifty times the nominal frequency of the network.

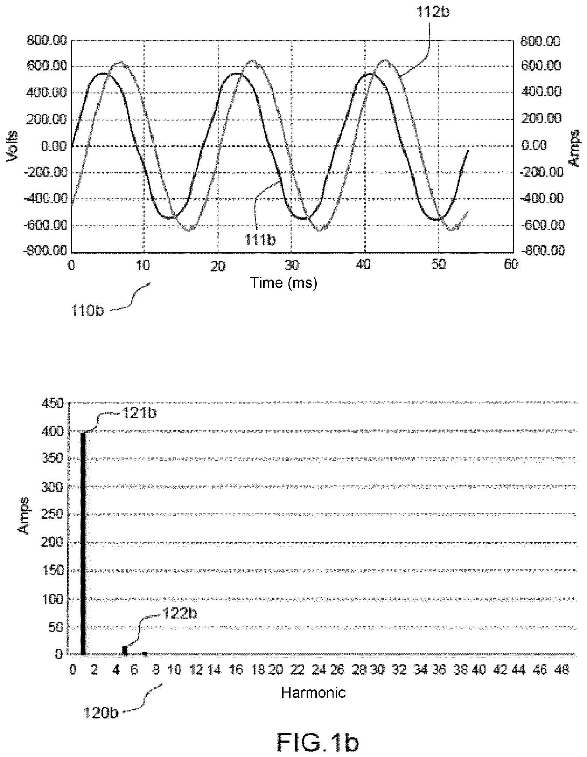

Figure 1b shows one example of electric voltage and current in a network affected by a harmonic polluter, with an active harmonic filter.

The harmonic polluter is the same as in Figure 1a, but an active harmonic filter has been added to the network.

The graph 110b shows the evolution of the voltage and the electric current on this circuit, for a period of a few milliseconds. The horizontal axis represents time, in milliseconds, the left-hand vertical axis represents voltage, in volts, and the right-hand vertical axis represents current, in amperes. The curves 111b and 112b respectively show the evolution of the voltage and of the current as a function of time.

The graph 120b shows, on this circuit, the harmonics of the electric current. The horizontal axis represents the harmonic order, and the vertical axis represents the current thereof, in amperes. The height of the bars represents the current of each harmonic. For example, the bar 121a shows that the 1st harmonic (or fundamental frequency) has a current of around 450 amps, while the bar 122a shows that the 5th harmonic, which is has the highest current apart from the fundamental frequency, has a current of less than 10 amperes.

Here, the curves 111b and 112b form an almost perfect sinusoid, and the current of the harmonics is virtually zero. The installation may therefore be connected here without any risk to a public network.

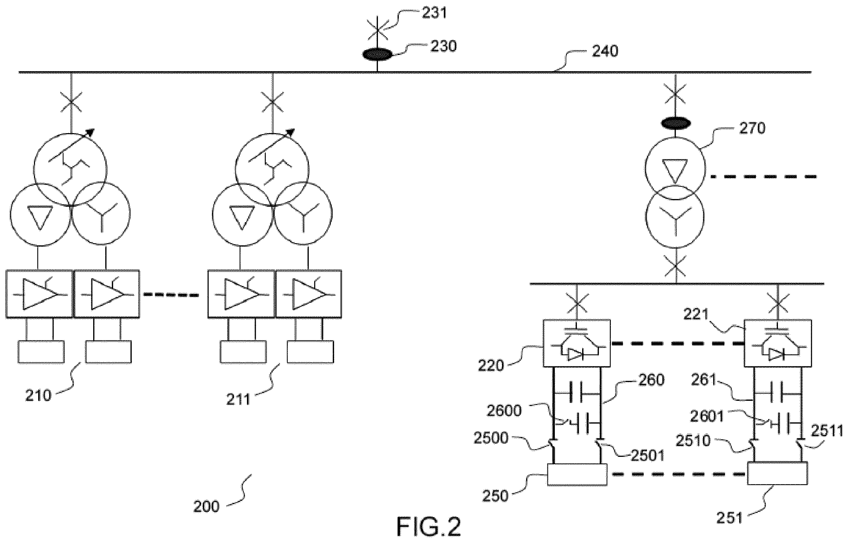

Figure 2 shows a first example of an electrical installation according to one set of embodiments of the invention.

The installation 200 is an electrical installation, connected to a public network 231 by a PCC 230. The connection to the public network supplies the installation 200 with electrical energy. The bus 240 is thus an AC electric bus receiving electrical energy from the public network 231 via the PCC 230.

An electrical installation may be defined here as a coherent set of circuits, apparatuses and electrical devices. The term "electrical system" could also be used. The electrical installation may also consist of a private electrical network. However, in this disclosure, the term "network" will generally denote a public electricity network, making it possible in particular to supply the installation with electrical energy.

The energy that is received is used to supply at least one non-linear load 210, 211 acting as harmonic polluter and/or a consumer consuming a large amount of reactive power. Although two harmonic polluters are shown in Figure 2, this example is not limiting, and an electrical installation according to the invention may comprise a single harmonic polluter, or on the other hand a larger number of polluters. The at least one harmonic polluter may for example comprise one or more industrial installations, such as a unit for producing hydrogen and/or oxygen by electrolysis, a chlor-alkali electrolysis unit, an aluminium foundry, an electric-arc furnace, a variable-speed motor, or a solar or wind farm.

In order to allow interconnection with the public network 231 at the PCC 230, the installation 200 comprises at least one active harmonic filter 220, 221 connected to the harmonic polluters and to the PCC 230. The active harmonic filters thus make it possible to regulate the quality of the electric current at the PCC 230, and to eliminate unwanted harmonic fluctuations with a view to connection to the public network 231. The active harmonic filters may be rectifier bridges of any type, single or multi-stage, for example based on IGBT switches. Although two active harmonic filters 220, 221 are shown in Figure 2, this is a non-limiting example, and the invention is applicable to installations comprising one active harmonic filter, or on the other hand a plurality of filters. In one set of embodiments of the invention, the harmonic filters 220, 221 may be connected to the PCC 230 via at least one voltage-matching transformer 270. The presence of the voltage-matching transformer 270 is however given only by way of non-limiting example, and is particularly useful for applying the invention to high-power units.

It is in particular possible to provide, in the case of a multiple arrangement of filters, one regulation per set of harmonic orders, thus simplifying regulation and power distribution. The power of each of these filters may be respectively matched to the predicted or measured current of each of the harmonics. Specifically, knowing the features of the harmonic polluters and the operating scenarios of the installation, it is possible to determine the orders of harmonics introduced into the network, as well as their current. The filters and the regulation are then dimensioned accordingly. Thus, the number and the power of the filters are optimized on the basis of the harmonic pollution to be handled. Safety margins may also be applied or requested by the network manager for each of the filters at a low operating cost, since these may ultimately be harnessed in the form of hydrogen production.

During the filtering of unwanted harmonics, and reactive power compensation, the active harmonic filters 220, 221 absorb and output harmonic currents or currents at the frequency of the network in phase opposition on the bus 240. To this end, each DC electric bus of each active harmonic filter is equipped with at least one capacitor making it possible alternately to absorb and output power. At reduced load, the power drawn by the active harmonic filters 220, 221 and not used for harmonic filtering or reactive power compensation may be used to absorb active power from the network in the form of AC current from the bus 240, to output it in the form of DC current on at least one DC electric bus 260, 261.

At least one electrolyser 250, 251 is connected to the DC electric bus, and is configured so as to produce hydrogen from the power received in the form of DC current on the DC bus. Here again, although Figure 2 shows two DC electric buses 260, 261, and two electrolysers 250, 251, the invention is not limited to this example, and, according to various embodiments of the invention, a single DC bus and electrolyser could be used, or on the other hand, a larger number of DC buses and electrolysers could be used.

It is in particular possible to have a set of DC buses 260, 261 respectively connecting each of the active harmonic filters 220, 221 to one or more electrolysers 250, 251. Depending on the faster or slower variation in filtering and/or harmonic compensation demand, some of the power absorbed by the filter may be allocated to hydrogen production. This makes it possible to dimension the filters and the associated electrolysers on the basis of the electric power likely to be received, and thus to optimize investments. The entire installation 200 is thus dimensioned so as to simultaneously achieve optimum harmonic filtering, a regulated load rate on the network and optimum hydrogen production, with minimal investment in terms of infrastructure over all of the production and life cycles of the installation.

Although the electrolyser or electrolysers are necessarily configured so as to produce hydrogen from the electrolysis of water, they are, in one set of embodiments of the invention, advantageously configured so as to furthermore produce oxygen, the electrolysis of water process allowing hydrogen and oxygen to be produced. It is understood that the electrolyser or electrolysers may be configured so as to produce gaseous hydrogen or a hydrogen-rich gas stream. A hydrogen-rich gas stream may in particular be defined as a gas stream mainly comprising hydrogen, that is to say comprising at least 90% hydrogen by volume, preferably at least 95% hydrogen by volume and even more preferably at least 99% hydrogen by volume. Hydrogen and oxygen production is understood to mean the production of dihydrogen and dioxygen, respectively.

The active harmonic filters 220, 221 are configured so as to absorb power available on the installation and to transmit all or some of their nominal power to the electrolysers 250, 251 in the form of DC current.

"Power available on the installation" is understood to mean the power able to be absorbed by the at least one active harmonic filter 220, 221 on the AC bus 240. This power may for example correspond to part of the power able to be supplied by the upstream network and/or that which is not currently being used for the operation of the at least one harmonic polluter 210, 211, or other elements of the installation. In particular, "supplied power" may be understood to mean the power supplied by the upstream network, in particular the public network, the available power corresponding to the difference between the supplied power and the power consumed by the other elements of the installation, in particular the at least one harmonic polluter. If and when needed, the at least one active harmonic filter may absorb all or some of this available power and transmit it to the at least one electrolyser in the form of DC current.

The nominal power of the active harmonic filter is the maximum power at which it is able to operate. Depending on the cases of use, it may absorb and transmit its nominal power, or a lower power, for example if the active power available on the network is lower than its nominal power, or if some of the nominal power is used for harmonic filtering and/or reactive power compensation.

The power absorption of each electrolyser may be the natural result of the DC voltage regulated on the DC buses and the impedance of the electrolyser. In another embodiment of the invention, the power may be transmitted to the electrolyser by an additional chopper of the main DC bus (switch, contactor or transistor 2500, 2501, 2510, 2511), of an additional AC voltage rectifier stage, or even over wider a power scale and DC voltage range by the addition of DC/DC converters (3700, 3710).

In mixed operation or operation allocated entirely to electrolysis, the DC current supplying electrolysers in order to produce hydrogen and, where applicable, oxygen makes it possible to harness part of the current absorbed by the filter on the basis of its nominal capacity in the form of gas, and not only through the filtering demand and/or the requested reactive compensation. This effect is particularly advantageous since hydrogen is being used increasingly, in particular as a fuel, and appears to be a particularly useful tool in energy transition. The electrical installation 200 therefore makes it possible to safely connect the harmonic polluters 210, 211 to the public network 231, while at the same time optimizing the operating points of the filters and harnessing the capacities that are present in the form of hydrogen. The hydrogen may also be stored at the output of the electrolysers, thereby making it possible to adapt the hydrogen production by regulating this production on the basis of the network capacities and/or the load variations of the adjacent polluter.

Since electrolysers are by nature able to operate only under DC current, the use of an electrolyser requires the investment of an AC/DC converter in order to operate on conventional AC networks. The invention thus makes it possible to optimize investment in terms of this energy conversion equipment, the proportion of which is significant, and makes it possible to consider part of the production on traditional power conversion systems, the deficiencies of which are compensated by the filtering system. The portion of power allocated to the production of hydrogen is ultimately intended to amortize the costs of these systems while at the same time maintaining their ability to compensate transients and contingencies of network configurations, voltage variations, or fluctuations in demand or availability of active and/or reactive power.

In addition, the gas that is produced may be easily stored. Gas may thus be produced at variable levels, depending on the level of strain on the filters, moreover for harmonic filtering and/or reactive power compensation in line with regulation of the adjacent electrical load and/or of the upstream network 231 regardless of the gas consumption cycle.

In one set of embodiments of the invention, the at least one harmonic polluter is itself a unit for producing hydrogen by electrolysis of water. The electrical installation then allows hydrogen production both by the hydrogen production unit 210, 211 generating the harmonic pollution and by the electrolyser 250, 251 connected to the active harmonic filter. However, the power of the electrolyser 250, 251 connected to the harmonic filter is dimensioned so as to generate hydrogen production lower than that of the hydrogen production unit 210, 211 in line with the generated harmonic pollution and the limit on the upstream network 231. The average hydrogen production of the at least one electrolyser 250, 251 is thus less than 50%, and preferably between 10% and 25%, of the combined average hydrogen production of the at least one electrolyser 250, 251 and of the hydrogen production unit 210, 211 generating the harmonic pollution.

Moreover, in the case of an application where the polluter is itself a unit for producing hydrogen by electrolysis, the invention takes advantage of the degradation of the electrolysis cells linked to ageing. Electrolysis cells, whatever their type, are subject to an ageing factor (5-20%) throughout a life cycle that requires the AC/DC conversion systems to be overdimensioned in the prior art, the systems being dimensioned for the final power of the electrolysis cell. These systems are therefore initially used at low load, thereby generally leading to degraded performance of the associated rectifiers.

In the case of applying the invention adjacent to a conventional water electrolysis system, this single performance variation makes it possible to inversely allocate the progressive availability of power allocated to hydrogen production connected to the filtering and compensation capacities as the adjacent system ages.

These are supplemented by the voltage variations of the network (depending on its configuration and its load), the operating temperature variations and the cooling circuit, production variations, and the constraints of the upstream network, that is to say the network 231.

The electrolysers 250, 251 may be of different types. For example, the electrolysers may belong to one or more types of electrolysers comprising electrolysis cells chosen from among:
- alkaline cells with improved polarization;
- pressurized alkaline cells;
- proton exchange membrane (PEM) cells;
- solid oxide cells.

The electrolysers are not however limited to these examples, and electrolysers of various existing or future types may be used, such as high-temperature electrolysers that are currently being developed.

PEM electrolysers are particularly advantageous because they offer load dynamics that are particularly suitable for 3rd-order regulation, and they thus make it possible to adapt very quickly to the constraints of the network or to the load variations of the adjacent system, that is to say of at least one harmonic polluter 210, 211, for example. Moreover, the load profile of batteries currently being industrialized is suited to the voltage and power levels of active filters currently available on the market. The addition of a PEM electrolyser and of an active harmonic filter to one and the same highly capacitive DC bus also makes it possible to ensure an optimum level of ripple on the DC voltage. This makes it possible in particular to reduce the ageing rate of the devices.

High-temperature electrolysers also have beneficial adaptation capabilities by taking advantage of the thermal inertia of the steam used by such systems, making it possible to damp the load variations on the hydrogen production.

The activity of the filters may be managed by a centralized controller or a set of controllers, for example a computer, a server, or more generally a processor, not shown in Figure 2, the controller receiving instantaneous measurements of voltage and current values on the installation or controlled by a larger regulation system of the installation.

The controllers may control the operations of the at least one active harmonic filter 210, 211. The filters may be controlled in line with several objectives, including:
- a first objective of harmonic filtering;
- a second objective of reactive power compensation and voltage stabilization;
- a third objective of optimizing hydrogen production on the basis of an available active power.

The first objective corresponds to the primary objective of filters, of removing unwanted harmonics, and is the priority objective to be achieved.

The second objective also makes it possible to optimize the power factor of the installation and therefore the dimensioning of the connection of the installation.

The third objective consists in improving the load rate of the installation by using the harmonic filters as AC/DC converters for the supply of the electrolysers, if a residual active power (that is to say after supplying the loads 210, 211 and using the filters 220, 221 to achieve the first two objectives) is available, and additional hydrogen production is desirable. The hydrogen production may for example be compared with a threshold, and the electrolysers supplied for as long as residual active power is available, and the threshold is not reached. As an alternative, the hydrogen production may be maximized by supplying the electrolysers with all of the available residual active power, within the limit of the absorption capacities of the electrolysers and when the two 1st regulation loops are not or are only slightly activated (that is to say when there is little harmonic filtering and/or reactive power compensation to use, for example when the load rate of the adjacent harmonic polluters is low).

This makes it possible, in addition to improving the situation of the installation (filtering of unwanted harmonics, increasing the power factor), to use the equipment to achieve hydrogen production that is as high as possible. This thus makes it possible to limit the need for new hydrogen production installations.

In one set of embodiments of the invention, the at least one filter 260, 261 may or may not alternatively be connected to at least one additional electrical capacitor, depending in particular on the expected reactive power compensation performance.

This makes it possible, in particular in the event of low use of the harmonic polluters, to increase the electrolysis load rate.

The greater the power scale of the harmonic polluter or polluters, the greater the number of active filters that need be connected in parallel, with regard to the power limits of this equipment. This parallel combination and the regulation per group of elements assigned to a regulation loop and/or frequency range then offer an additional optimization lever. Specifically, the regulations of each filter and of the associated electrolyser may be adjusted by variable setpoints on each objective. For example, for each operating configuration of the installation, it is possible to assign a minimum number of active or passive filters for the power filtering and a minimum number of reactive compensation filters added to a number of mixed elements allowing either maximum filtering or maximum compensation or maximum hydrogen production in line with the load of the adjacent harmonic polluter and the configurations of the upstream network 231. Thus, harmonic filtering and/or reactive power compensation are ensured at all times, regardless of the level of activity and the performance of the polluter, even while maximum hydrogen production is simultaneously ensured.

In one set of embodiments aimed at these mixed uses, the installation comprises switches (switches or transistors) 2500, 2501, 2510, 2511 for respectively completely connecting or disconnecting the electrolysers 250, 251. This makes it possible to free the regulation of the rectifier 220, 221 from any constraint of regulating the DC voltage when the power thereof is entirely allocated to the harmonic filtering and/or the reactive compensation. The voltage regulation, freed by this isolation, makes it possible to optimize the efficiency of the filter. This makes it possible, for example, to continue to use the active filter for harmonic filtering and/or reactive power compensation during electrolyser maintenance operations.

This disconnection moreover makes it possible to isolate the associated electrolysis modules for any maintenance or replacement, during which the rectifier is harnessed by being allocated only to compensation of the network.

In this case, it may also be appropriate to increase the capacitance of the DC bus by connecting an additional capacitor bank, for example by way of switches 2600 and 2601 increasing the available reactive power.

In one set of embodiments of the invention, at least one harmonic polluter of the installation uses hydrogen produced by at least one electrolyser of the installation as input.

For example, the hydrogen that is produced may be reused in iron and steel production in combination with an iron ore electrolysis unit (Ulcowin and Ulcolysis processes) whose power conversion units for the electrolysis supply are in fact polluting in terms of harmonics, as well as the associated arc furnace operating on significant load cycles.

Within the installation, the hydrogen production by the electrolyser is all the more efficient in combination with the iron and steel production process when reducing the iron ore with hydrogen, the associated electric-arc furnace then being the harmonic polluter. Harnessing the power from the filters to supply an electrolysis cell is all the more relevant here as the load rate of an arc furnace is particularly variable depending on the cycles of the process and, by design, the source of strong dynamic reactive power inrushes. The power of the filters that is not used for harmonic filtering when the load rate of the arc furnace is low and may then be allocated to hydrogen production, the invention making it possible here to optimize, to a maximum extent, all of the devices, and allowing a stabilized grid load rate and immediate harnessing of hydrogen in the associated process.

In one set of embodiments of the invention, the load fluctuations of these units are regulated, and the control scheme of the filtering and electrolysis unit may be adapted in order to anticipate the various operating cycles and thus damp sudden variations in hydrogen production.

The above exemplary application extends to any installation equipped with an arc furnace (copper, zinc, etc.).

In one set of embodiments of the invention, the at least one electrolyser is also configured so as to produce oxygen, used as input to the process used by the harmonic polluter. In the same way as hydrogen, the oxygen produced, where applicable, may be harnessed directly by the process associated with the harmonic polluter.

Depending on the associated process, and in particular the various iron and steel processes, the harnessing of the immediate supply of hydrogen and oxygen, coupled if necessary with other adjacent sources and/or high-pressure storage systems or in the liquid state, is then optimized.

Hydrogen as an energy vector in transport is also a source for numerous delocalized applications, thus contributing to the necessary networking of production in order to supply various modes of transport.

In rail transport in particular, the invention is particularly suited simultaneously to hydrogen demand for autonomous rail transport and the load variation over a daily and weekly cycle and the strong harmonic distortion present on the electrical traction network. A production unit at the end of the chain of an electrified rail network would thus simultaneously satisfy localized demand for hydrogen production, and the service to network for the harmonic compensation of variable-speed drives and provide active and reactive power compensation on the basis of the high load variation rates inherent to such a network.

Such a system may also be integrated into a tram system, offering, throughout its electrical system, fluctuating service and hydrogen production points to the network that are associated with hydrogen needs in urban mobility.

The invention may also make it possible to optimize marine propulsion electrical systems, making it possible to regulate the primary source of energy to a constant speed and load point and harnessing the load variations and the load of the generators in the form of hydrogen.

More generally, the invention is suitable for any industrial production unit operating in cycles (automotive industry, tyre industry, etc.) and is all the more effective when the use of hydrogen and, where applicable, of oxygen that are produced are able to be harnessed in the adjacent process.

The use of the invention is also applicable for supporting the network on its own, in addition to renewable electrical energy production units such as on-shore or offshore solar or wind farms also using high-capacitance power electronics that are harmonic polluters, and in the case of asynchronous generators used on wind turbines consuming large amounts of reactive energy. The reactive power compensation and filtering service to the network provided by the invention is then strongly complementary to the adaptation of active power absorption associated with the intermittent nature of solar and wind production.

In the case of offshore wind farms, and in particular those connected to land via a DC current link (HVDC), applying the invention makes it possible not only to damp active power variations on the installation by regulating hydrogen production, but also to optimize the power electronics equipment required for the DC/AC connection to the network. The optimization of the investment in terms of power electronics equipment as a whole is then significant, making it possible to offer a more stable power supply profile that is more constant at an optimal power factor for the network.

Completely independently, the invention may be designed for only its dynamic reactive energy compensation, voltage stabilization and active power regulation service to the network. The design and regulation are then controlled by the network manager and/or established by local voltage or voltage harmonics measurements and/or frequency variation measurements.

These exemplary applications demonstrate the ability of the invention to locally harness hydrogen, and where applicable oxygen, produced by electrolysers in addition to services to the network, and therefore to improve flow management in the network 200, while at the same time limiting the cost and complexity of transporting hydrogen.

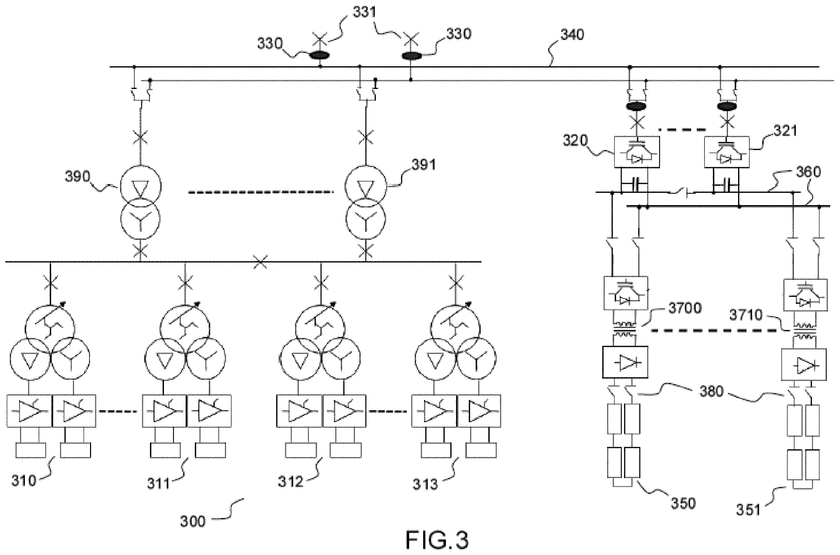

Figure 3 shows a second example of an electrical installation according to one set of embodiments of the invention.

Like the installation 200, the installation 300 comprises at least one harmonic polluter 310, 311, 312, 313, an AC electric bus 340, at least one PCC 330 allowing connection to a public electricity network 331, and at least one harmonic filter 320, 321. The installation 300 comprises a plurality of electrolysers 350, 351. In one set of embodiments of the invention, the installation 300 may also optionally comprise at least one voltage transformer 390, 391.

The number of each of these elements is not limited to the number of elements shown in Figure 3 and, according to various embodiments, the installation 300 may comprise a variable number of each of them.

The installation 300 is supplied by a high-voltage network 331. A high-voltage network may be used to supply electricity to very high-energy installations. For example, at least one of the harmonic polluters 310, 311, 312, 313 may be an arc furnace.

In order to perform high-voltage harmonic filtering, at least one harmonic filter 320, 321 is static reactive power compensation and harmonic filtering (STATCOM) equipment.

In the case of a high-voltage network, the voltage on the bus 360 may be greater than the voltage authorized at input of the electrolysers. In order to be able to supply the electrolysers, the installation 300 comprises at least one DC-DC converter 3700, 3710 configured so as to reduce the voltage of the at least one DC bus 360 to at least one 2nd DC bus 380, to which the at least one electrolyser 350, 351 is connected, so that the voltage on the at least one 2nd DC bus 380 complies with the voltage accepted at input by the at least one electrolyser 350, 351.

The electrolyser or electrolysers may thus be connected without risk in order to produce hydrogen, even if the voltage of the installation 300 is much greater than the voltage accepted at input by the electrolysers.

Depending on the voltages and powers under consideration, these DC/DC converters 3700, 3710 may be simple choppers, converters equipped with single-phase transformers optimized by an operating frequency independent of that of the network. Although Figure 3 shows DC/DC converters as converters equipped with single-phase transformers optimized by an operating frequency independent of that of the network, this example is not limiting and a person skilled in the art will be able to easily replace these converters with any type of DC/DC converter, in particular on the basis of the powers of the installation, its operating cycles and the selected electrolyser technology.

In addition, Figure 3 shows stacks of 4 electrolysers arranged in series. This example is not limiting, and the invention is applicable to any series or parallel arrangement of electrolysers.

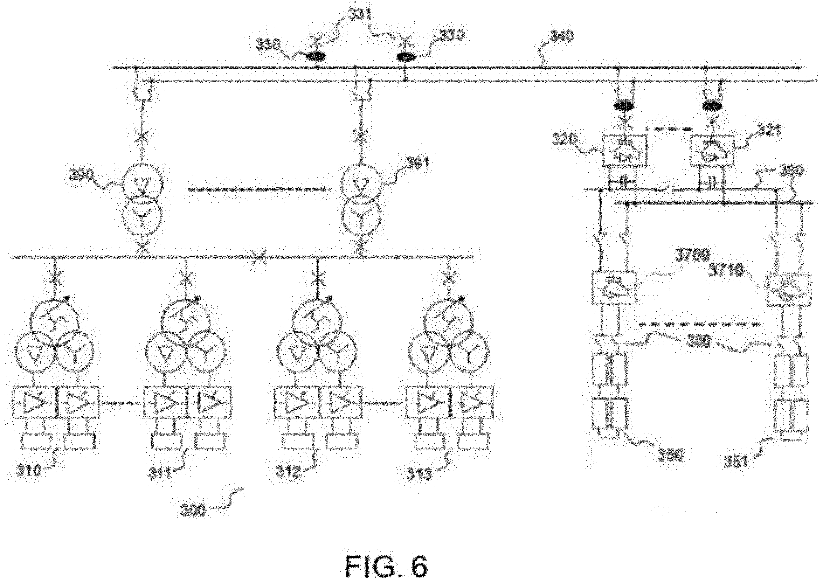

Figure 6 shows a third example of an electrical installation according to one set of embodiments of the invention. Optionnally, the at least one DC-DC converter 3700, 3710 is connected to the at least one 2nd DC bus 380 without AC/DC converter.

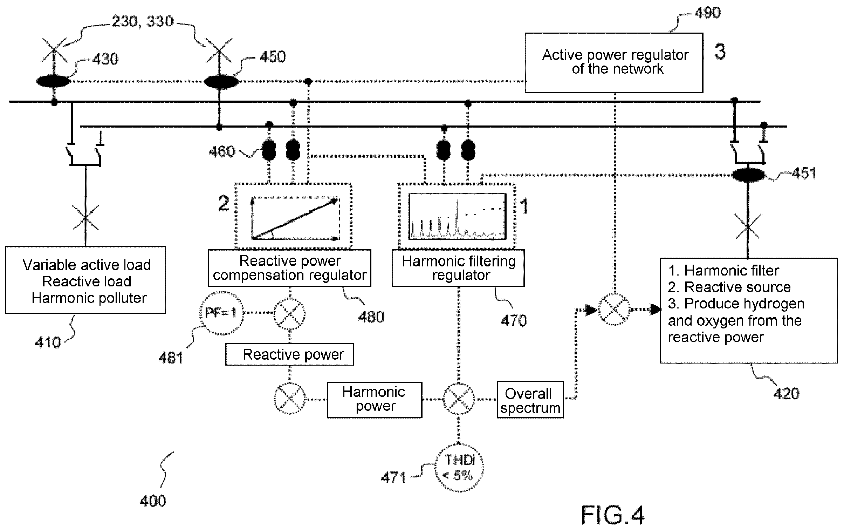

Figure 4 shows one example of nested regulation loops in one set of embodiments of the invention.

In one set of embodiments of the invention, the installation, such as the installation 200, 300, is controlled by a controller on the basis of measurements taken in real time on the installation. These measurements may in particular consist of current strength measurements 430, 450 and/or voltage measurements 460, preferably at the PCC 230, 330.

In Figure 4, the reactive loads or harmonic polluters, for example 210, 211, 310, 311, 312, 313 are shown at 410, and the active filters and electrolysers, for example 220, 221, 250, 251, 320 , 321, 350, 351, are shown at 420.

As indicated above, the activity of the various elements of the installation according to the invention may be controlled by a controller, which may for example be a server, a computer, or a computer program. To this end, the controller may use, at input, measurements on the installation, for example current strength measurements 430, 450, voltage measurements 470, and execute regulators calculating execution parameters for the elements of the installation in order to achieve an objective, and send the corresponding instructions to the elements of the installation. A regulator may thus take the form for example of computer-executable code, or more generally as instructions for configuring the controller in order to achieve the desired regulation. The regulators may be defined by successive priority levels: a first regulator will thus be performed as a priority, in order to ensure a regulation loop considered to be priority, and then a second regulator, etc.

According to one set of embodiments of the invention, a first, a second and/or a third regulator may be applied to a defined group of filters.

A first regulator 470 determines, from current strength measurements 430, 450, the harmonic spectrum to be compensated with respect to a setpoint 471, and determines an associated load rate of all or some of the active harmonic filters 220, 221, 320, 321.

This first regulation loop may also be performed from a voltage measurement 470 in order to allow harmonic compensation on the network, and therefore filtering of polluters connected upstream of the network 231, 331. This first regulator therefore makes it possible to control the active harmonic filters in order to achieve the objective of filtering the harmonics. As indicated above, this filtering objective may be performed in order to allow the connection of harmonic polluters to a public network and/or to ensure filtering for this network.

A second regulator 480 determines the reactive power compensation required at the connection point, based on the voltage measurements 460 and current measurements 430, 450, and a power factor setpoint 481. This regulation loop therefore makes it possible to ensure that the power factor at the PCC will be as close as possible to the setpoint.

Finally, a third regulator 490 determines the active power available on the installation. This active power may for example be calculated by subtracting the power consumed by the harmonic polluters from the power supplied to the installation, and/or on the basis of the power supplied by the public network 231, 331. The third regulator 490 may also determine the filtering capacity still available for each active filter, after applying the first two regulation loops. The third regulator 490 may thus adjust the load rate of the filters and electrolysers on the basis of a fixed setpoint point or a dynamic regulation system for regulating the network, the available active power, the use of the filters by the two first regulation loops. This third regulation loop therefore makes it possible to use both the available active power, and the filter processing capacity not used by the first and/or the second regulator, to generate DC currents sent to the electrolysers to produce hydrogen.

This example demonstrates the ability of the invention to combine the objectives of harmonic filtering, reactive power compensation and hydrogen production. However, it is given only by way of example, and according to various embodiments of the invention, all or some of these regulation loops could be used. The regulators may also be activated or deactivated at various times as needed.

Finally, the order of priority of the various regulators makes it possible to control the elements of the installation so as to achieve objectives in order of priority. In the example shown in Figure 4, the first, second and third regulators make it possible, in order of priority, to perform harmonic filtering, to compensate reactive power, and finally to ensure as much hydrogen production as possible with the power of the filters that is not used for the first two regulations.

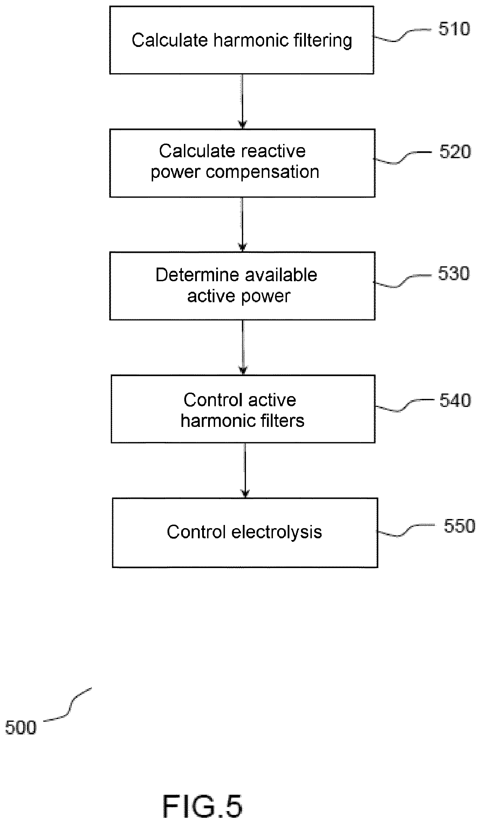

Figure 5 shows one example of a method according to one set of embodiments of the invention.

The method 500 may for example be performed in an installation such as installation the 200 or the installation 300, comprising at least one harmonic polluter. The method may in particular be implemented by a controller, for example a computer, receiving measurements of current and voltage on the installation at input, and controlling the elements of the installation (filters, electrolysers, etc.) at output.

The method 500 comprises a first step 510 of calculating harmonic filtering, which may for example be performed by at least one active harmonic filter 220, 221, 320, 321. The harmonic filtering is determined on the basis of determining unwanted harmonics. This makes it possible to determine setpoint instructions to be sent to the harmonic filters.

The method 500 comprises a second step 520 of calculating a reactive compensation on the installation. The reactive power compensation may in particular be calculated so as to achieve a target power factor. The setpoint instructions for the harmonic filters may be adapted accordingly. This also makes it possible to determine whether additional capacitors, for example 2600, 2601, should be connected to the DC buses.

The method 500 comprises a third step 530 of calculating the active power available on the installation. This available active power may for example be calculated in connection with the adjacent system by measuring the adjacent process or regulating it in cascade. This available power may also be coupled to regulation of the network on a larger unit controlled by the manager upstream of the PCC.

The method 500 comprises a 4th step 540 of controlling the various active harmonic filters. The active harmonic filters may be controlled by allocating all or some of the power of the active harmonic filters:
- το τηε harmonic filtering;
- το τηε reactive power compensation;
- το the transmission of active power on the DC bus, in particular with a view to satisfying constraints in terms of current and DC voltage of the electrolysers.

The method comprises a last step 550 of controlling the electrolysers so as to produce hydrogen and oxygen from the power received on the DC bus. This step may for example be performed by at least one electrolyser 250, 251, 350, 351.

The method 500 thus makes it possible to control an installation, in order simultaneously to perform harmonic filtering, to compensate reactive power, and to use the available active power to produce hydrogen by electrolysis.

In other embodiments of the invention, the first step 510 and the second step 520 are not both performed, but only one of the two is performed. This makes it possible to control an installation in order to perform harmonic filtering, or to compensate the reactive power, while at the same time using the available active power to produce hydrogen by electrolysis.

The above examples demonstrate the ability of the invention to allow harmonic filtering and reactive power compensation in an electrical installation affected by harmonic polluters, while at the same time optimizing the entire electrical installation and the performance in terms of connection to the network. The installation thus limits the cost of infrastructure investments, and harnesses the energy absorption capacity available on the network in the form of hydrogen. These are however given only by way of example, and do not in any way limit the scope of the invention, which is defined in the claims below.

## Claims

1. Electrical installation (200, 300) comprising:
- at least one harmonic polluter (210, 211, 310, 311, 312, 313);
- at least one active harmonic filter (220, 221, 320, 321) connected to the at least one harmonic polluter at at least one point of common coupling PCC (230, 330), the active harmonic filter having at least one DC electric bus (260, 261, 360) equipped with at least one capacitor;
- at least one electrolyser (250, 251, 350, 351) connected to the DC electric bus of the active harmonic filter, and configured so as to produce hydrogen from power transmitted in the form of DC electric current (200, 300);
- the at least one active harmonic filter being configured so as to absorb power available on the installation and to transmit all or some of its nominal power to the electrolyser in the form of DC current.

2. Electrical installation according to Claim 1, wherein the at least one harmonic polluter (210, 211) is at least one unit for producing hydrogen by electrolysis of water, and the at least one electrolyser (250, 251) is dimensioned so as to ensure an average hydrogen production of less than 50%, and preferably between 10% and 25%, of the sum of the average hydrogen production of the at least one electrolyser (250, 251) and of the at least one unit for producing hydrogen by electrolysis of water.

3. Electrical installation according to Claim 1, wherein the at least one harmonic polluter comprises at least one device chosen from a group comprising a chlor-alkali electrolysis unit, an aluminium foundry, an electric-arc furnace, a traction network, a variable-speed motor, a solar farm and a wind farm.

4. Electrical installation according to one of Claims 1 to 3, wherein the electrolyser connected to the DC bus is a proton exchange membrane (PEM) cell.

5. Electrical installation according to one of Claims 1 to 4, comprising:
- a set of active harmonic filters (220, 221, 320, 321) allocated to a harmonic range, to a reactive power compensation capacity and to a hydrogen and oxygen production capacity;
- for each of the active harmonic filters, a DC bus (260, 261, 360) connecting it to at least one electrolyser (250, 251, 350, 351) dimensioned on the basis of the power available on the DC bus at the output of said active harmonic filter.

6. Electrical installation according to one of Claims 1 to 5, wherein the at least one electrolyser connected to an active harmonic filter is able to be connected and disconnected to and from at least one additional electrical capacitor via a switch or a transistor (2500, 2501, 2510, 2511) on the DC bus.

7. Electrical installation according to one of Claims 1 to 6, wherein the at least one harmonic polluter is associated with a process using hydrogen produced by the at least one electrolyser as input.

8. Electrical installation according to one of Claims 1 to 7, wherein the electrolyser is additionally configured so as to produce oxygen, and the at least one harmonic polluter is associated with a process using the oxygen produced by the at least one electrolyser as input.

9. Electrical installation according to one of Claims 1 to 8, wherein the point of common coupling is configured to be connected to a high-voltage network, and the at least one active harmonic filter is associated with at least one static compensator by way of at least one DC/DC converter or chopper (3700, 3710) supplying the at least one electrolyser.

10. Electrical installation according to one of Claims 1 to 9, comprising:
- at least one second DC bus (380), to which the at least one electrolyser (350, 351) is connected;
- and at least one multi-stage DC/DC or AC/DC converter (3700, 3710) configured so as to reduce the voltage of the at least one DC bus (360) to at least one second DC bus (380), so that the voltage on the at least one second DC bus (380) complies with the voltage accepted at input by the at least one electrolyser (350, 351).

11. Electrical installation according to one of Claims 1 to 10, comprising a controller configured so as to control the operations of the at least one active harmonic filter and of the at least one electrolyser on the basis of at least one element chosen from among:
- a current measurement (430, 450) on the installation;
- a voltage measurement (460) on the installation;
- instructions from a manager of a network (231, 331) to which the PCC (230, 330) is coupled.

12. Electrical installation according to Claim 11, wherein the controller is configured so as to execute:
- a first regulator (470) configured so as to perform harmonic filtering;
- a second regulator (480) configured so as to perform reactive power compensation;
- a third regulator (490) configured so as to control the electrolysis on the basis of an active power available on the installation.

13. Electrical installation according to one of Claims 11 or 12, wherein the controller is additionally configured so as to execute dynamic stabilization of the voltage at the PCC, through load absorption on said capacitor.

14. Method (500) comprising:
- calculating at least one harmonic filtering operation (510), or reactive power compensation operation (520), on an electrical installation (200, 300) comprising:
∘ at least one harmonic polluter (210, 211, 310, 311, 312, 313);
∘ at least one active harmonic filter (220, 221, 320, 321) connected to the at least one harmonic polluter at at least one point of common coupling (PCC, 230, 330), the active harmonic filter having at least one DC electric bus (260, 261, 360) equipped with a capacitor;
∘ at least one electrolyser (250, 251, 350, 351) connected to the DC bus of the active filter, and configured so as to produce hydrogen from power transmitted in the form of DC electric current (200, 300);
- calculating a power available on the installation (530);
- controlling (540) the at least one active harmonic filter in order to:
∘ perform at least the harmonic filtering or the reactive power compensation;
∘ absorb power available on the installation and transmit all or some of its nominal power to the electrolyser in the form of DC current;
- controlling (550) the at least one electrolyser to produce hydrogen from the power transmitted on the DC bus.

15. Computer program product comprising program code instructions recorded on a computer-readable medium and configured, when the computer program product is executed by a processor, so as to control equipment of an electrical installation (200, 300) in order to perform the method according to Claim 14.
